## Europäisches Patentamt

## European Patent Office

## Office européen des brevets

(11) Publication number: **0 095 197**
**B1**

(12) **EUROPEAN PATENT SPECIFICATION**

(45) Date of publication of patent specification: **03.02.88**

(51) Int. Cl.⁴: **C 10 G 9/36, B 01 D 1/14**

(21) Application number: **83200510.2**

(22) Date of filing: **12.04.83**

(54) **Apparatus and process for vaporizing a heavy hydrocarbon feedstock with steam.**

(30) Priority: **26.05.82 GB 8215352**

(43) Date of publication of application:
**30.11.83 Bulletin 83/48**

(45) Publication of the grant of the patent:
**03.02.88 Bulletin 88/05**

(84) Designated Contracting States:
**BE DE FR GB IT NL**

(56) References cited:
**US-A-1 738 082**
**US-A-2 090 766**
**US-A-3 654 240**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Grondman, Alexander**
**Buitendijk Oost 25**
**NL-4791 RK Klundert (NL)**

(74) Representative: **Aalbers, Onno et al**
**P.O. Box 302**
**NL-2501 CH The Hague (NL)**

## Description

The present invention relates to an apparatus for the vaporization of a heavy hydrocarbon feedstock by mixing the hydrocarbon feedstock with superheated steam. The invention further relates to a process for vaporizing such a feedstock with steam.

A well-known process for upgrading hydrocarbon feedstock to obtain valuable gaseous (mainly olefins) and liquid products therefrom is the so-called thermal cracking process. To reduce the hydrocarbon partial pressure as well as the contact time during the cracking phase, the hydrocarbon feedstock is normally diluted with superheated steam in order to promote the vaporization of the hydrocarbon feedstock, prior to introducing vaporized hydrocarbon feedstock into the cracking section of a furnace. Such a process in which steam is used as a vaporization medium is also called steam-cracking. If heavy hydrocarbon feedstocks, e.g. materials with a boiling range above 300°C are to be processed, the vaporization of the liquid material is normally carried out in a plurality of stages. The hydrocarbon feedstock is first preheated, whereafter the still liquid feedstock is admixed with superheated steam to form a gas/liquid two phase mixture and to simultaneously heat the liquid, the so formed mixture of steam and liquid droplets is further heated to partially vaporize the liquid, whereafter the remaining liquid is fully vaporized by introducing a further quantity of superheated steam into the flow of steam and partially vaporized liquid. The steam is for example added to the hydrocarbon feedstock by means of a nozzle so formed that steam can be introduced as an annulus around a core of the hydrocarbon feedstock.

US—A—3 654 140 discloses an apparatus for the vaporization of a heavy hydrocarbon feedstock with steam, comprising an inner tubular element and an outer tubular element surrounding the inner tubular element to form an annular space, the inner tubular element and the outer tubular element having substantially coinciding longitudinal axes, inlet means for introducing a heavy hydrocarbon feedstock into the inner tubular element and inlet means for introducing superheated steam into the annular space, the inner tubular element and the outer tubular element each terminating in open ends arranged in a plane substantially perpendicular to the coinciding longitudinal axes.

According to this publication, this apparatus is used to introduce feedstock droplets into a riser pertaining to a fluidized caralytic cracking unit.

When the known apparatus is used for introducing feedstock droplets into a flowline coke formation in the flowline can occur, especially in that part of the flowline where steam is introduced for the final vaporization step. Although the occurrence of coke formation cannot be fully scientifically explained it might be assumed that the following phenomenon occurs in coke formation. When a heavy feedstock has been partially vaporized, the lighter fractions are in the vapour phase while the heavier fractions are still in the liquid phase. When the partially vaporized liquid is further contacted with superheated steam to complete the vaporization, the temperature of the liquid droplets will substantially immediately rise to the steam temperature upon contact with the steam. Part of the lighter components in the liquid droplets will be immediately vaporized, having as consequence, especially for the larger droplets, that a skin of heavy material is formed via evaporization and chemical change and further evaporation is limited by the slow diffusion of lighter material through the outer skin of the droplets. The inability of the droplets to completely evaporate would lead to coke formation upon further subjection of the droplets to the high steam temperature. Droplets of liquid reaching the wall of the mixing nozzle would easily stick onto the wall thereby experiencing a long residence time, at which the liquid droplets are subjected to high temperatures. The long residence time of the liquid droplets onto the wall of the mixing nozzle will result in a high risk of coke formation onto said wall. Due to coke formation the passage for liquid and steam in the mixing nozzle is diminished, resulting in an increase of the pressure drop over the mixing nozzle.

When the pressure drop increase becomes inadmissible the thermal cracking operation should be stopped for cleaning the mixing nozzle. It will be understood that that is a time and cost consuming operation.

It is an object of the present invention to provide an improved apparatus for the vaporization of a heavy hydrocarbon feedstock in the presence of steam, wherein the risk of coke formation in the apparatus is minimized.

To this end the apparatus for the vaporization of a heavy hydrocarbon feedstock with steam according to the invention is characterized in that the apparatus further comprises a frustoconically shaped element at one end connected to the open end of the outer tubular element, having a longitudinal axis substantially coinciding with the longitudinal axes of the tubular elements and diverging in a direction away from the outer tubular element, and in that the frusto-conically shaped element has an apex angle of at most 20 degrees.

The arrangement of a slightly diverging frusto-conically shaped element downstream of the place where the superheated steam meets the heavy hydrocarbon feedstock prevents the contact of liquid droplets with the wall of the element thereby avoiding the risk of coke formation onto the sidewall of the apparatus.

The invention further relates to a process for vaporizing a heavy hydrocarbon liquid with steam, in which process an apparatus according to the invention is used.

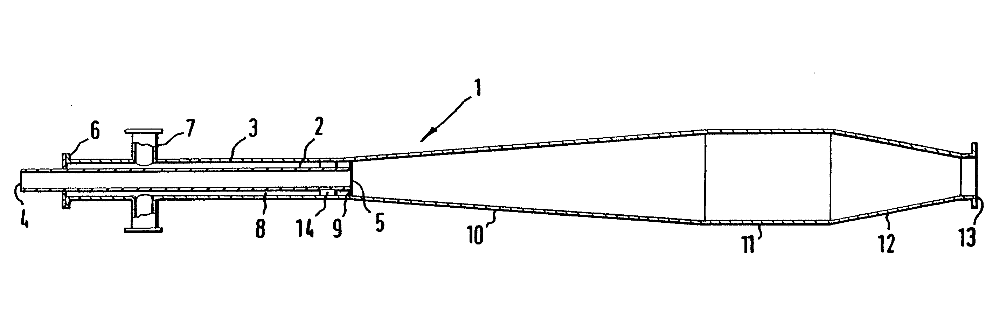

The invention will now be described by way of example only with reference to the accompanying drawing showing a suitable embodiment of an apparatus according to the invention.

The drawing shows a nozzle 1 for supplying superheated steam to a partially vaporized heavy hydrocarbon feedstock for complete vaporization thereof. The nozzle 1 comprises an inner tubular element 2 and an outer tubular element 3 having coinciding longitudinal axes. The inner tubular element 2 is open at both ends to form an inlet 4 and an outlet 5 for the partially vaporized heavy hydrocarbon feedstock. The outer tubular element 3 being open at its downstream end, is closed at the other end by means of a flange 6 welded to the inner tubular element 2. A number of inlet nozzles 7, being substantially equally distributed over the circumference of the outer tubular element 3 are provided for the supply of superheated steam into an annular space 8 formed between the inner tubular element 2 and the outer tubular element 3. In order to prevent the generation of swirls in the annular space 8 during the steam injection, a plurality of guide vanes 14 are provided, said guide vanes being substantially uniformly distributed over the cross section of the annular space 8. The open end of the outer tubular element 3 and the outlet 5 of the inner tubular element 2 are arranged in substantially the same plane perpendicular to the coinciding longitudinal axes of the tubular elements 2 and 3 thereby forming an annular passage 9 for the discharge of superheated steam from the annular space 8. The outer tubular element 3 is at its open end connected to a frusto-conically shaped element 10 having a longitudinal axis substantially coinciding with the longitudinal axes of the tubular elements. The frusto-conically shaped element 10 diverges in a direction away from the outer tubular element 3. The frusto-conically shaped element 10 has an apex angle of at most 20 degrees. The minimum apex angle of the element 10 is suitably at least 6 degrees.

The base of the frusto-conically shaped element 10 is connected to a tubular element 11, which is connected in its turn to a second frusto-conically shaped element 12, converging in a direction away from the tubular element 11. The frusto-conically shaped element 12 is at its free end provided with a flange 13 for connecting the nozzle 1 to a not shown feed line of a thermal cracking unit.

The operation of the nozzle will now be described with reference to the above-mentioned nozzle elements.

During operation the nozzle 1 is arranged in a not further shown system for the vaporization of heavy hydrocarbon feedstock prior to passing the feedstock to a cracking unit. A heavy hydrocarbon feedstock in liquid form is first passed through a preheater for heating the liquid, the heated liquid is subsequently mixed with superheated steam and passed through a furnace for partially vaporizing the liquid hydrocarbons to obtain for example 70 percent vapour.

The partly vaporized liquid is subsequently mixed with a further quantity of superheated steam to evaporate the remaining liquid in the feedstock. The steam which is used in the last vaporization step should be superheated to such a temperature that the steam sensible heat is sufficient to vaporize the remaining heavy components of the feedstock and provides an extra margin of superheat necessary to avoid any condensation risk after mixing. Condensation of the steam should be avoided in view of the risk of erosion of the system.

According to the invention at least the above-mentioned second mixing step should be carried out in a nozzle as described with reference to the drawing. Thereto superheated steam is introduced into the annular space 8 via the steam inlet nozzles 7, whereas the partially vaporized liquid is introduced into the inner tubular element 2 via the inlet 4 thereof.

The steam leaving the annular space 8 via the annular outlet passage 9, forms an annulus around the core of hydrocarbon feedstock leaving the inner tubular element 2 via outlet 5.

The heat of the steam causes vaporization of the liquid remained in the partially vaporized liquid leaving the inner tubular element 2. To prevent the passage of liquid droplets from the core of hydrocarbon feedstock to the wall of the nozzle with the aforementioned risk of coke formation, the annulus of steam and the core of hydrocarbon feedstock are passed through the frusto-conically shaped element 10 located downstream of the outer tubular element 3.

The apex of the cone pertaining to the frusto-conically shaped element 10 should be at most 20 degrees to prevent the generation of inadmissible turbulence in the steam upon flowing along the wall of the frusto-conical element 10. Due to such a turbulence it might easily happen that still unvaporized liquid droplets pass through the annulus of steam and adhere to the wall of the frusto-conically shaped element. The combination of a high temperature and long residence time for the so adhered liquid particles would result in coke formation onto the wall of element 10.

It has been found that an apex angle of about 6 degrees is already sufficient to obtain the desired flow pattern in the frusto-conically shaped element 10. A suitable apex angle is for example 16 degrees.

By the arrangement of the frusto-conically shaped element 10, radial transport of the liquid droplets will not cause these droplets to reach the wall of said element 10.

The vaporization of liquid is completed in the tubular element 11 downstream of the frusto-conically shaped element 10. The total length of the frusto-conically shaped element 10 and the tubular element 11 should be so chosen that all liquid has been vaporized prior to leaving said tubular element. The mixture of steam and vapour is subsequently introduced into a cracking furnace via the frusto-conically shaped connecting element 12. In the furnace the vapour is first superheated and, in an adjacent radiant section finally heated at such a temperature that the hydrocarbon is cracked and converted into lighter fractions, which are recovered downstream of the furnace via suitable compression and condensation steps.

It should be noted that the cross-sectional area of the second tubular element is suitably so chosen, that at a given amount of steam, required for a given amount of hydrocarbon feedstock, a high velocity of the steam in the annular space 8 is obtained, for example about 75—80 m/s.

## Claims

1. Apparatus for the vaporization of a heavy hydrocarbon feedstock with steam, comprising an inner tubular element and an outer tubular element surrounding the inner tubular element to form an annular space, the inner tubular element and the outer tubular element having substantially coinciding longitudinal axes, inlet means for introducing a heavy hydrocarbon feedstock into the inner tubular element and inlet means for introducing superheated steam into the annular space, the inner tubular element and the outer tubular element each terminating in open ends arranged in a plane substantially perpendicular to the coinciding longitudinal axes, characterized in that the apparatus further comprises a frusto-conically shaped element at one end connected to the open end of the outer tubular element, having a longitudinal axis substantially coinciding with the longitudinal axes of the tubular elements and diverging in a direction away from the outer tubular element, and in that the frusto-conically shaped element has an apex angle of at most 20 degrees.

2. Apparatus as claimed in claim 1, wherein the apex angle of the frusto-conically shaped element is at least 6 degrees.

3. Apparatus as claimed in claim 1 or 2, wherein the other end of the frusto-conically shaped element is connected to one end of a further tubular element having a longitudinal axis substantially coinciding with the longitudinal axes of the inner and the outer tubular element.

4. Apparatus as claimed in any one of the claims 1—3, wherein a plurality of guide vanes are arranged in the annular space downstream of the steam inlet(s), said guide vanes being substantially uniformly distributed over a cross section of the annular space.

5. Apparatus as claimed in any one of the claims 3—4, wherein the other end of the further tubular element is connected to a frusto-conically shaped connecting element converging in a direction away from the further tubular element.

6. Process for the vaporization of a heavy hydrocarbon feedstock with steam, in which process an apparatus as claimed in any one of the preceding claims is used.

## Patentansprüche

1. Vorrichtung zum Verdampfen einer schweren Kohlenwasserstoffbeschickung mit Dampf, umfassend ein inneres röhrenförmiges Element und ein äußeres röhrenförmiges Element, welches das innere röhrenförmige Element unter Bildung eines ringförmigen Raumes umgibt, wobei das innere röhrenförmige Element und das äußere röhrenförmige Element praktisch zusammenfallende Längsachsen aufweisen, umfassend Einlaßorgane zur Einspeisung einer schweren Kohlenwasserstoffbeschickung in das innere röhrenförmige Element und Einlaßorgane zur Einspeisung von überhitztem Dampf in den ringförmigen Raum, wobei das innere röhrenförmige Element und das äußere röhrenförmige Element jeweils durch offene Enden ihren Abschluß finden, welche in einer Ebene praktisch senkrecht zu den zusammenfallenden Längsachsen angeordnet sind, dadurch gekennzeichnet, daß die Vorrichtung zusätzlich an einem Ende ein kegelstumpfförmiges Element aufweist, welches mit dem offenen Ende des äußeren röhrenförmigen Elementes verbunden ist, dessen Längsachse praktisch mit den Längsachsen der röhrenförmigen Elemente zusammenfällt und welches in einer von dem äußeren röhrenförmigen Element hinweggerichteten Richtung divergiert, wobei das kegelstumpfförmige Element einen Winkel am Scheitelpunkt von höchstens 20° aufweist.

2. Vorrichtung, wie in Anspruch 1 beansprucht, wobei das kegelstumpfförmige Element einen Winkel am Scheitelpunkt von mindestens 6° aufweist.

3. Vorrichtung, wie in Anspruch 1 oder 2 beansprucht, wobei das andere Ende des kegelstumpfförmigen Elementes mit einem Ende eines weiteren röhrenförmigen Elementes verbunden ist, dessen Längsachse praktisch vollständig mit den Längsachsen des inneren und äußeren röhrenförmigen Elementes zusammenfällt.

4. Vorrichtung, wie in irgendeinem der Ansprüche 1 bis 3 beansprucht, wobei in dem ringförmigen Raum in Stromrichtung gesehen nach dem (den) Einlaß (Einlässen) für Dampf eine Mehrzahl von Führungselementen angeordnet sind, welche Führungselemente praktisch gleichmäßig über einen Querschnitt des ringförmigen Raums verteilt sind.

5. Vorrichtung, wie in irgendeinem der Ansprüche 3 oder 4 beansprucht, wobei das andere Ende des weiteren röhrenförmigen Elementes mit einem kegelstumpfförmigen Verbindungselement verbunden ist, welches in einer von dem weiteren röhrenförmigen Element hinweggerichteten Richtung konvergiert.

6. Verfahren zum Verdampfen einer schweren Kohlenwasserstoffbeschickung mittels Dampf, in welchem eine Vorrichtung verwendet wird, wie in irgendeinem der vorhergehenden Ansprüche beansprucht.

## Revendications

1. Appareil pour la vaporisation d'une matière première composée d'hydrocarbure lourd au moyen de vapeur d'eau, comprenant un élément tubulaire intérieur et un élément tubulaire extérieur qui entoure l'élément tubulaire intérieur pour former un espace annulaire, l'élément tubulaire intérieur et l'élément tubulaire extérieur ayant des axes longitudinaux sensiblement confondus, des moyens d'entrée servant à introduire un hydrocarbure lourd dans l'élément tubulaire intérieur et des moyens d'entrée servant à introduire de la vapeur d'eau surchauffée dans l'espace annulaire, l'élément tubulaire intérieur et l'élément tubulaire extérieur se terminant chacun par des extrémités ouvertes disposées dans un plan sensiblement perpendiculaire aux axes longitudinaux confondus, caractérisé en ce que l'appareil comprend en outre un élément de forme tronconique qui est relié, à une extrémité, à l'extrémité ouverte de l'élément tubulaire extérieur, qui a un axe longitudinal sensiblement confondu avec les axes longitudinaux des éléments tubulaires, et qui diverge, dans le sens qui s'éloigne de l'élément tubulaire extérieur, et en ce que l'élément de forme tronconique possède un angle au sommet de 20° au maximum.

2. Appareil selon la revendication 1, dans lequel l'angle au sommet de l'élément de forme tronconique est au moins de 6°.

3. Appareil selon la revendication 1 ou la revendication 2, dans lequel l'autre extrémité de l'élément de forme tronconique est reliée à une extrémité d'un autre élément tubulaire possédant un axe longitudinal sensiblement confondu avec les axes longitudinaux des éléments tubulaires intérieure et extérieur.

4. Appareil selon l'une quelconque des revendications 1 à 3, dans lequel plusieurs aubes de guidage sont agencées dans l'espace annulaire situé en aval de l'entrée ou des entrées de vapeur d'eau, lesdites aubes de guidage étant sensiblement uniformément réparties sur une section de l'espace annulaire.

5. Appareil selon l'une quelconque des revendications 3 et 4, dans lequel l'autre extrémité de l'élément tubulaire additionnel est reliée à une élément de raccordement de forme tronconique qui converge dans le sens qui s'éloigne de l'élément tubulaire additionnel.

6. Procédé de vaporisation d'une matière première composée d'hydrocarbure lourd au moyen de vapeur d'eau, dans lequel on utilise un appareil selon l'une des revendications précédentes.